# EUROPÄISCHE PATENTSCHRIFT

(11) **EP 2 077 959 B1**
(45) Veröffentlichungstag und Bekanntmachung des Hinweises auf die Patenterteilung: **10.07.2013**
(21) Anmeldenummer: 07817607.0
(22) Anmeldetag: 02.10.2007
(51) Int. Cl.: B62D 15/02

(54) **Verfahren zur Regelung oder Steuerung einer Servoantriebseinheit in einem Lenksystem eines Fahrzeugs und entsprechendes Lenksystem**
Procedure for regulating or controlling a servo drive unit in a steering system of a vehicle and corresponding steering system
Prodédé de réglage ou de commande d'une unité d'entraînement servo dans un système de direction d'un véhicule et système de direction correspondant

(30) Priorität: 02.10.2006 DE 102006046834
(43) Veröffentlichungstag der Anmeldung: 15.07.2009
(73) Patentinhaber: Robert Bosch GmbH, 70442 Stuttgart (DE)
(72) Erfinder: HENKE, Torsten, 71332 Waiblingen (DE); BLESCH, Tobias, 71679 Asperg (DE); HIRY, Pascal, 71665 Vaihingen/Enz (DE); WALTER, Gerhard, 70839 Gerlingen (DE)
(86) Internationale Anmeldenummer: PCT/DE2007/001765
(87) Internationale Veröffentlichungsnummer: WO 2008/040330

(56) Entgegenhaltungen:
- EP-A- 0 460 582
- EP-A- 0 732 252
- EP-A- 0 856 720
- DE-A1-102005 053 902
- JP-A- 5 131 947
- US-A- 5 276 624

## Beschreibung

Die Erfindung bezieht sich auf ein Verfahren zur Regelung oder Steuerung einer Servoantriebseinheit in einem Lenksystem eines Fahrzeugs nach dem Oberbegriff des Anspruches 1.

### Stand der Technik

In der DE 197 03 903 A1 wird ein Lenksystem in einem Kraftfahrzeug beschrieben, bei dem ein vom Fahrer vorgegebener Lenkradwinkel über eine Lenkwelle und einem Getriebe auf ein Lenkgestänge übertragen wird, welches kinematisch mit den gelenkten Rädern des Fahrzeugs gekoppelt ist und die Räder mit dem gewünschten Lenkwinkel verstellt. Zur Lenkunterstützung ist ein elektrischer Servomotor vorgesehen, der über das Lenkgetriebe ein unterstützendes Moment einleitet. Die Höhe dieses unterstützenden Momentes hängt von verschiedenen Faktoren ab, unter anderem von dem vom Fahrer eingeleiteten Handmoment, gegebenenfalls aber auch von sonstigen Fahrzeugparametern und -zustandsgrößen wie zum Beispiel der Fahrzeuggeschwindigkeit.

Die Information über die Größe des Lenkwinkels, der vom Fahrer über das Lenkrad vorgegeben wird, wird außerdem für diverse elektronische Regel- und Steuersysteme im Kraftfahrzeug benötigt. Zur Ermittlung des tatsächlich eingestellten Lenkwinkels ist gemäß der DE 197 03 903 A1 ein berührungslos arbeitender Drehwinkelsensor vorgesehen, der zur Detektierung eines Magnetfeldes ausgebildet ist, welches von einem drehfest mit der Lenkwelle verbundenen Magneten erzeugt wird. Der Magnet ist benachbart zum Lenkritzel angeordnet, welches an der Stirnseite der Lenkwelle sitzt und die Lenkbewegung über das Getriebe auf das Lenkgestänge überträgt. Der Sensor befindet sich dagegen in dem Getriebegehäuse. Die Größe des Lenkwinkels wird als Funktion des umlaufenden, von dem Magneten erzeugten Magnetfeldes berechnet. Zu berücksichtigen ist hierbei jedoch, dass das Lenkrad Mehrfachumdrehungen ausführen kann, was für die genaue Ermittlung der aktuellen Lenkwinkelgröße die Information über die Mittel- bzw. Ausgangs-Nulllage der Lenkwelle erforderlich macht.

Die US 5276624 A, die den Oberbegriff des Anspruchs 1 definiert, offenbart, die aktuelle Lenkwinkelposition einer Lenkwelle in einem Lenksystem eines Fahrzeugs aus der Differenz der Radgeschwindigkeiten der Hinterräder zu bestimmen. Dies ist an eine Mindestgeschwindigkeit des Fahrzeugs geknüpft, außerdem kann das Ergebnis durch fahrdynamische Einflüsse verfälscht werden, beispielsweise bei einem Schleudern des Fahrzeugs, bei dem trotz eines Lenkwinkeleinschlags die Winkelgeschwindigkeiten der Hinterräder gleich groß sein können. Ein weiteres Problem liegt darin, dass die nicht lenkbaren Hinterräder auch im Falle einer regulären Kurvendurchfahrt nur eine verhältnismäßig kleine Differenz-Winkelgeschwindigkeit aufweisen, die Rückschlüsse auf den Lenkwinkel erlaubt. Um eine verwertbare Information zu erhalten, muss daher die Winkelgeschwindigkeit der beiden Hinterräder mit hoher Genauigkeit bestimmt werden.

In der JP 05131947 A wird beschrieben, wie die Ausgangs-Nulllage der Lenkwelle in einem Lenksystem bestimmt werden kann. Auf der Grundlage des Lenkmoments, der Fahrzeuggeschwindigkeit sowie der Winkelgeschwindigkeit und - beschleunigung eines Servomotors im Lenksystem wird nach einem Schätzmodell die Ausgangs-Nulllage bestimmt.

### Offenbarung der Erfindung

Der Erfindung liegt die Aufgabe zugrunde, mit einfachen Maßnahmen den Lenkwinkel in einem Lenksystem eines Fahrzeuges zu bestimmen. Gemäß einer vorteilhaften Ausführung soll die Information über den aktuellen Lenkwinkel auch ohne Verwendung eines Lenkwinkelsensors an der Lenkwelle zu bestimmen sein.

Diese Aufgabe wird erfindungsgemäß mit den Merkmalen des Anspruches 1 gelöst. Die Unteransprüche geben zweckmäßige Weiterbildungen an.

Das Steuergerät, welches zur Regelung und/oder Steuerung einer Servoantriebseinheit in einem Lenksystem eines Fahrzeuges eingesetzt wird, verarbeitet mindestens eine Fahrzeugzustandsgröße, die dem Steuergerät zuführbar ist und bei der es sich nicht um eine Lenkwinkelgröße handelt, wobei aus dem Wert dieser Fahrzeugzustandsgröße die Ausgangs-Nulllage der Lenkwelle zu bestimmen ist. Die Ausgangs-Nulllage der Lenkwelle liegt vor, falls die betreffende Fahrzeugzustandsgröße in einem definierten Wertebereich liegt. Als Fahrzeugzustandsgröße wird insbesondere eine den kinematischen oder kinetischen Zustand des Fahrzeugs bestimmende Größe bzw. eine daraus abgeleitete Größe herangezogen, beispielsweise ein kinematischer Freiheitsgrad des Fahrzeugs.

Die Ermittlung der Ausgangs-Nulllage der Lenkwelle stellt eine wesentliche Information dar, die für die exakte Bestimmung des Lenkwinkels erforderlich ist. Da die Lenkübersetzung bei Personenkraftwagen und Nutzfahrzeugen in der Regel so gewählt ist, dass mehrere Umdrehungen des Lenkrades für den gesamten einstellbaren Lenkwinkelbereich zwischen den Extremausschlägen der lenkbaren Räder möglich sind, wird die Information über die Ausgangs-Nulllage der Lenkwelle zwingend benötigt, da andernfalls nicht sicher festgestellt werden kann, in welchem Winkelbereich sich die Lenkwelle aktuell befindet. Die Information über die Ausgangs-Nulllage wird nun erfindungsgemäß über zumindest eine Fahrzeugzustandsgröße ermittelt, bei der es sich nicht um eine Lenkwinkelgröße handelt. Beispielsweise kann als Fahrzeugzustandsgröße die Differenz-Winkelgeschwindigkeit zwischen den gelenkten Rädern herangezogen werden, wobei auf die Ausgangs-Nulllage erkannt wird, falls die Differenz-Winkelgeschwindigkeit unterhalb eines Grenzwertes liegt. Grundsätzlich kommen aber alle Fahrzeugzustandsgrößen in Betracht, die Aufschluss über die aktuelle Winkellage im Lenksystem geben können. Alternativ oder kumulativ zur Differenz-Winkelgeschwindigkeit der gelenkten Räder kann dies auch beispielsweise das Lenkmoment sein, das Motormoment eines elektrischen Servomotors in dem Lenksystem, die Querbeschleunigung des Fahrzeuges oder die Gierrate oder eine sonstige Zustandsgröße.

Die Informationsverarbeitung erfolgt in dem Steuergerät, welches im Lenksystem zur Regelung bzw. Steuerung der Servoantriebseinheit vorgesehen ist. Die Bestimmung der Ausgangs-Nulllage in dem Steuergerät bedeutet die Integration einer zusätzlichen Funktionalität in dem Steuergerät ohne zusätzliche sensorische Mittel, sondern lediglich auf der Grundlage von Fahrzeugzustandsgrößen, die bereits im Fahrzeug bzw. in Regel- und Steuergeräten im Fahrzeug vorliegen und in dem Steuergerät auf Softwareebene verarbeitet werden. Die Informationen über die Fahrzeugzustandsgrößen werden beispielsweise über einen CAN-Bus auf das Steuergerät in dem Lenksystem übertragen.

Die Bestimmung der Ausgangs-Nulllage der Lenkwelle kann zudem der Ermittlung des aktuellen Wertes des Lenkwinkels zugrunde gelegt werden. Um den Absolutwert des Lenkwinkels zu erhalten, wird zweckmäßig auf eine weitere Lenkwinkelinformation zurückgegriffen, wobei es grundsätzlich ausreichend ist, einen Wert zu ermitteln, der mit dem Lenkwinkel korreliert. Hierzu wird beispielsweise die Stellposition der Servoantriebseinheit ermittelt, die mechanisch fest mit der Lenkwelle gekoppelt ist, so dass aus der aktuellen Stellposition der Servoantriebseinheit Rückschlüsse auf den Lenkwinkel gezogen werden können. In Verbindung mit der Information über die Ausgangs-Nulllage der Lenkwelle ist dadurch die exakte Bestimmung des absoluten Lenkwinkels möglich.

Als Servoantriebseinheit wird zweckmäßig ein elektrischer Servomotor eingesetzt, dessen Motormoment ebenfalls als Fahrzeugzustandsgröße zur Bestimmung der Ausgangs-Nulllage der Lenkwelle herangezogen werden kann. Aber auch die Höhe des Lenkwinkels kann mithilfe des elektrischen Servomotors bestimmt werden, da die Rotorwelle des elektrischen Servomotors kinematisch mit der Lenkwelle gekoppelt ist und das Übersetzungsverhältnis zwischen Lenkwellenumdrehung und Rotorwellenumdrehung bekannt ist.

Alternativ zu einem elektrischen Servomotor kann grundsätzlich auch ein hydraulischer Servomotor eingesetzt werden. In diesem Fall kann der Stellweg des Hydraulikzylinders, der kinematisch über das Lenkgetriebe mit der Lenkwelle gekoppelt ist, zur Ermittlung des Lenkwinkels herangezogen werden.

Es ist vorgesehen, dass in dem Steuergerät ein Indexsignal verarbeitet wird, welches zur Verbesserung und Plausibilisierung des Wertes für die Ausgangs-Nulllage erzeugt wird. Dieses Indexsignal wird bei beispielsweise über einen CAN-Bus auf das Steuergerät in dem Lenksystem übertragen.

Die Bestimmung der Ausgangs-Nulllage der Lenkwelle kann zudem der Ermittlung des aktuellen Wertes des Lenkwinkels zugrunde gelegt werden. Um den Absolutwert des Lenkwinkels zu erhalten, wird zweckmäßig auf eine weitere Lenkwinkelinformation zurückgegriffen, wobei es grundsätzlich ausreichend ist, einen Wert zu ermitteln, der mit dem Lenkwinkel korreliert. Hierzu wird beispielsweise die Stellposition der Servoantriebseinheit ermittelt, die mechanisch fest mit der Lenkwelle gekoppelt ist, so dass aus der aktuellen Stellposition der Servoantriebseinheit Rückschlüsse auf den Lenkwinkel gezogen werden können. In Verbindung mit der Information über die Ausgangs-Nulllage der Lenkwelle ist dadurch die exakte Bestimmung des absoluten Lenkwinkels möglich.

Als Servoantriebseinheit wird zweckmäßig ein elektrischer Servomotor eingesetzt, dessen Motormoment ebenfalls als Fahrzeugzustandsgröße zur Bestimmung der Ausgangs-Nulllage der Lenkwelle herangezogen werden kann. Aber auch die Höhe des Lenkwinkels kann mithilfe des elektrischen Servomotors bestimmt werden, da die Rotorwelle des elektrischen Servomotors kinematisch mit der Lenkwelle gekoppelt ist und das Übersetzungsverhältnis zwischen Lenkwellenumdrehung und Rotorwellenumdrehung bekannt ist.

Alternativ zu einem elektrischen Servomotor kann grundsätzlich auch ein hydraulischer Servomotor eingesetzt werden. In diesem Fall kann der Stellweg des Hydraulikzylinders, der kinematisch über das Lenkgetriebe mit der Lenkwelle gekoppelt ist, zur Ermittlung des Lenkwinkels herangezogen werden.

Gemäß einer vorteilhaften Weiterbildung ist vorgesehen, dass in dem Steuergerät ein Indexsignal verarbeitet wird, welches zur Verbesserung und Plausibilisierung des Wertes für die Ausgangs-Nulllage erzeugt wird. Dieses Indexsignal wird bei jedem Umlauf der Lenkwelle erzeugt. Das Indexsignal wird zweckmäßig über eine Sensoreinheit an der Lenkwelle erzeugt. Wird beispielsweise die Differenz-Winkelgeschwindigkeit zwischen den gelenkten Rädern des Fahrzeugs als Fahrzustandsgröße für die Bestimmung der Ausgangs-Nulllage herangezogen, so kann mithilfe des Indexsignals eine Plausibilisierung dahingehend erfolgen, dass außergewöhnliche Fahrzustände wie Beispiel Schleudern des Fahrzeuges ausgeschlossen bzw. identifiziert werden können. Im Regel- bzw. Normalfall wird ein Gleichlauf der gelenkten Räder nur in der Ausgangs-Nulllage der Lenkwelle stattfinden. Beim Schleudern des Fahrzeuges kann jedoch der Fall eintreten, dass trotz eingeschlagenen, gelenkten Rädern die Differenz-Winkelgeschwindigkeit zu Null wird; in diesem Fall kann aber über das zusätzliche Indexsignal eine Plausibilierungsabfrage durchgeführt werden, über die festgestellt werden kann, dass sich das Fahrzeug außerhalb des Normalfalles bewegt und somit trotz Gleichlaufs der gelenkten Räder die Lenkwelle außerhalb ihrer Ausgangs-Nulllage steht.

Zur Bestimmung des Rotorlagesignals ist an der Rotorwelle zweckmäßig ein Magnet angeordnet, dessen Magnetfeld von einem zugeordneten, gehäusefesten Magnetfeldsensor detektiert wird. Da dieses Rotorlagesignal sicherheitsrelevant ist, kann die Bestimmung des Rotorlagesignals in redundanter Weise ausgeführt werden, wofür zum einen zwei unabhängig arbeitende Magnetfeldsensoren zur Detektierung des Magnetfelds in Betracht kommen, zum anderen aber auch zwei Signalaufbereitungseinheiten, die diesen Magnetfeldsensoren zugeordnet sind. Alternativ zu den beiden Signalaufbereitungseinheiten kann auch nur eine einzige Signalaufbereitungseinheit vorgesehen sein, die mit einem Umschalter gekoppelt ist, über den die einzige Signalaufbereitungseinheit wahlweise mit einem der beiden Magnetfeldsensoren zu verbinden ist.

Für das Indexsignal, das unabhängig von der Erfassung der Rotorlage ist und für die Plausibilisierung der Rotorposition verwendet wird, genügt ein einziger Magnetfeldsensor. Aus der Rotorposition wird schließlich die Lenkwinkelinformation abgeleitet.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung eines Lenksystems in einem Fahrzeug, mit einem elektrischen Servomotor, über den ein Unterstützungsmoment im Lenksystem erzeugbar ist, wobei dem Servomotor ein Steuergerät zugeordnet ist,
- Fig. 2: eine schematische Darstellung des elektrischen Servomotors einschließlich des Steuergerätes, mit einer Darstellung des grundsätzlichen Funktionsablaufes im Steuergerät,
- Fig. 3: eine detailliertere Darstellung des Funktionsablaufes im Steuergerät,
- Fig. 4: ein Strukturbild einer Digital-Analyseeinheit aus Fig. 3 im Detail,
- Fig. 5: eine schematische Darstellung des elektrischen Servomotors mit einer Sensorik zur Erzeugung eines Indexsignals bei jedem Umlauf der Rotorwelle, wobei die Sensorik zwei Magnetfeldsensoren und zwei Signalaufbereitungseinheiten umfasst,
- Fig. 6: eine Fig. 5 entsprechende Darstellung, bei der die Sensorik ebenfalls zwei Magnetfeldsensoren umfasst, jedoch eine Signalaufbereitungseinheit und zusätzlich ein Umschalter vorgesehen ist.

In den Figuren sind gleiche Bauteile mit gleichen Bezugszeichen versehen.

### Ausführungsform(en) der Erfindung

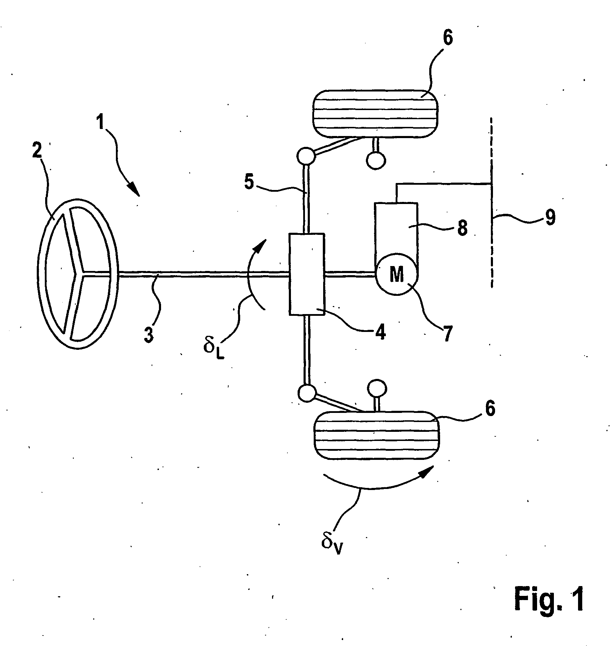

Das in Fig. 1 dargestellte Lenksystem 1 umfasst ein Lenkrad 2, das drehfest mit einer Lenkspindel bzw. -welle 3 verbunden ist, über das der vom Fahrer vorgegebene Lenkwinkel δ_{L} auf die gelenkten Vorderräder 6 übertragbar ist, in denen ein Radlenkwinkel δᵥ eingestellt wird. Die Lenkwelle 3 ist über ein Lenkgetriebe 4 kinematisch mit einem Lenkgestänge 5 gekoppelt, das eine Zahnstange umfasst, die bei einer Lenkbewegung verstellt wird, woraufhin in den Vorderrädern 6 der Radlenkwinkel δᵥ eingestellt wird.

Zur Unterstützung des vom Fahrer über das Lenkrad 2 aufgebrachte Handmoment ist ein elektrischer Servomotor 7 vorgesehen, der ein zusätzliches Unterstützungsmoment über das Lenkgetriebe 4 in das Lenksystem 1 einspeist. Der Servomotor 7 ist als Elektromotor ausgeführt. Dem Servomotor 7 ist ein Steuergerät 8 zugeordnet, welches mit einem CAN-Bus 9 kommuniziert. Über den CAN-Bus 9 werden Daten und Signale mit anderen Regel- und Steuergeräten im Fahrzeug ausgetauscht.

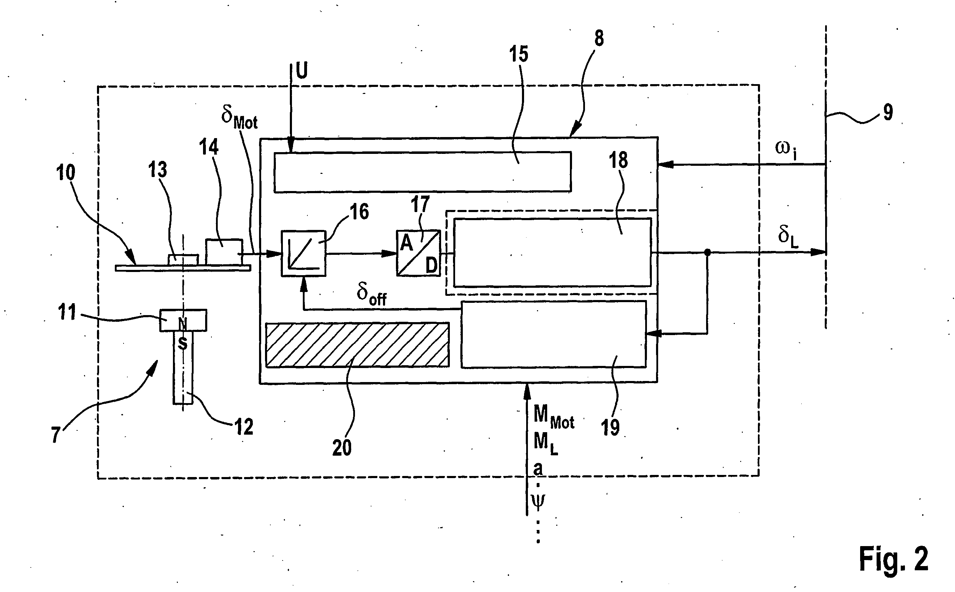

Wie Fig. 2 zu entnehmen, ist dem elektrischen Servomotor 7 eine Sensorik 10 zugeordnet, über die der Drehwinkel δ_{Mot} der Rotorwelle 12 des Servomotors bestimmt wird. Die Sensorik 10 umfasst einen drehfest mit der Rotorwelle 12 verbundenen Magneten 11, der an der Stirnseite der Rotorwelle aufsitzt und dessen Magnetfeld von einem gehäusefest angeordneten Magnetfeldsensor 13 - beispielsweise ein Hallsensor - detektiert wird. Des Weiteren umfasst die Sensorik 10 eine Sensor-Auswerteeinheit 14, in der der Wert für den Rotordrehwinkel δ_{Mot} aus den Sensorsignalen ermittelt und an das Steuergerät 8 weitergeleitet wird.

Das Steuergerät 8 ist mit einer Stromverbrauchssteuerung 15 ausgestattet, die den Stromverbrauch im Steuergerät 8 steuert und von extern mit einer Versorgungsspannung U versorgt wird.

Des Weiteren umfasst das Steuergerät 8 diverse Bausteine, in denen die eingehenden Signale verarbeitet und als Ausgangssignal der aktuell eingestellte Lenkwinkel δ_{L} berechnet wird. Als Eingangssignal fließt, wie beispielhaft eingetragen, die Winkelgeschwindigkeit ωᵢ jedes Rades, insbesondere aber die Winkelgeschwindigkeit der gelenkten Räder ein, wobei diese Information über den CAN-Bus 9 bereitgestellt wird. Als weitere Fahrzustandsgrößen können das Motormoment M_{Mot}, welches von dem elektrischen Servomotor 7 erzeugt wird, das Lenkmoment M_{L}, die Fahrzeugquerbeschleunigung a und/oder die Gierrate ψ̇ und gegebenenfalls weitere Fahrzeugzustandsgrößen in das Steuergerät 8 eingespeist werden, wobei diese Zustandsgrößen zweckmäßig ebenfalls über den CAN-Bus 9 bereitgestellt werden. Der ermittelte Lenkwinkel δ_{L} wird als Ausgangssignal über den CAN-Bus verbreitet.

Als Elektronikbausteine umfasst das Steuergerät 8 eine erste Berechnungseinheit 16, die ein Verstärkungsglied und eine Offset-Korrektureinheit umfasst, einen A/D-Wandler 17, eine allgemeine Berechnungseinheit 18, eine Offset-Korrektureinheit 19 sowie eine Überwachungseinheit 20. Der Rotordrehwinkel δ_{Mot}, welcher von der Sensorik 10 ermittelt wird, wird zunächst der ersten Berechnungseinheit 16 zugeführt, in welcher eine Verstärkung und eine Offset-Korrektur durchgeführt wird. Anschließend wird der ermittelte Wert dem A/D-Wandler 17 zugeführt, in welchem das analoge Signal in ein digitales Signal umgewandelt wird. Diese digitale Signal wird danach in die Berechnungseinheit 18 weitergeleitet, wo auf Software-Ebene eine Plausibilisierung des ermittelten Wertes durchgeführt wird, was insbesondere über einen Vergleich mit Referenzsignalen erfolgt. Zur Ermittlung des Lenkwinkels δ_{L} in der Berechnungseinheit 18 werden die vorgenannten Fahrzeugzustandsgrößen berücksichtigt.

Zur Verbesserung der Güte der berechneten Werte wird der Lenkwinkel δ_{L} der Offset-Korrektureinheit 19 zugeführt, in der ein Offset-Winkel δ_{off} ermittelt und in einer rückführenden Schleife der Berechnungseinheit 16 zugeführt wird.

Die Überwachungseinheit 20 beinhaltet eine Sicherheitslogik, um die Funktionstüchtigkeit der Module des Steuergerätes 8 zu überprüfen und sicherzustellen. Hierzu sind in der Überwachungseinheit 20 Teststrukturen realisiert, über die Testsignale erzeugt werden, die als digitale Signale den einzelnen Modulen des Steuergerätes zugeführt werden, um deren Funktionsfähigkeit zu überprüfen. Des Weiteren kann die Überwachungseinheit 20 auch Signale aus den Modulen aufnehmen und einer Plausibilität unterziehen.

Die Offset-Korrektureinheit 19 ist nach Art eines Reglers aufgebaut, in dem der berechnete Wert des Lenkwinkels δ_{L} über die Offset-Korrektureinheit 19 zurückgeführt und ein Korrekturwert δ_{**o**ff} als Offset-Winkelkorrekturwert dem Integrierer 16 zugeführt wird. Über die Offset-Korrektureinheit 19 wird das Lenkwinkelsignal von Störgrößen bereinigt.

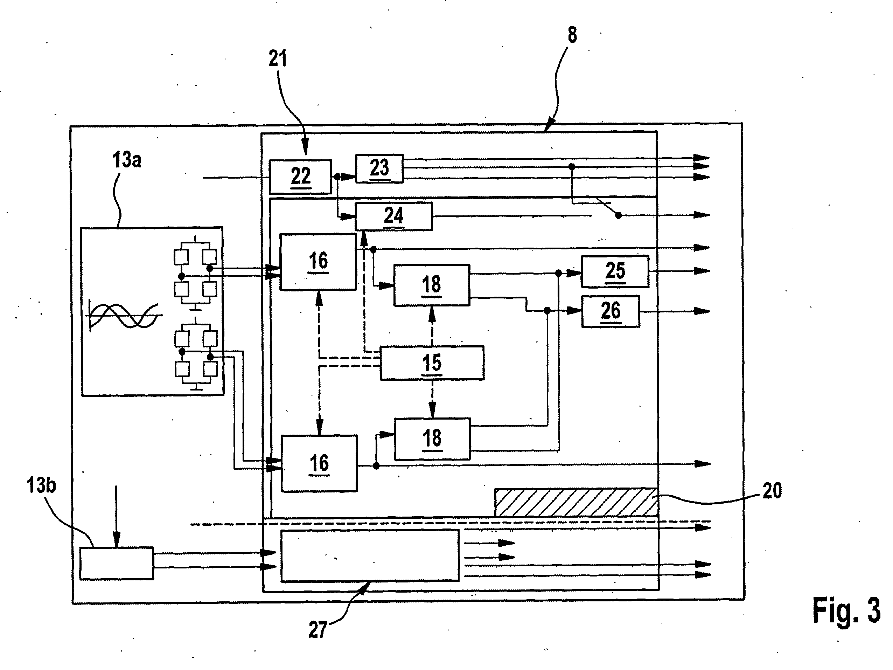

Fig. 3 zeigt eine detaillierte Darstellung des in dem Steuergerät 8 realisierten ASIC. In einem ersten Sensor 13a, der Bestandteil der Sensorik 10 ist, werden über Auswerteschaltungen aus den detektierten Sensorsignalen Sinus- und Kosinussignale generiert, die jeweils ersten Berechnungseinheiten 16 im Steuergerät 8 zugeführt werden. Diese ersten Berechnungseinheiten 16 sind ebenso wie die zweiten, nachfolgenden Berechnungseinheiten 18 doppelt vorhanden und jeweils einem der Sensorsignale aus dem ersten Sensor 13a zugeordnet. In den ersten Berechnungseinheiten 16 erfolgt eine erste Signalverarbeitung, anschließend werden die vorverarbeiteten Signale den nachgeschalteten, zweiten Berechnungseinheiten 18 zugeführt. Die Verarbeitung der Sensorsignale im Sinus- und Kosinusverlauf erfolgt parallel.

Nach der weiteren Signalverarbeitung in den zweiten Berechnungseinheiten 18 werden die Ausgangssignale über Schnittstellen 25 und 26 weiteren Bearbeitungsmodulen im Fahrzeug zur Verfügung gestellt, wobei es sich bei der Schnittstelle 25 um eine SPI-Schnittstelle (serial peripherial interface) und bei der Schnittstelle 26 um eine UART-Schnittstelle (universal asynchronous receiver/transmitter) handelt.

Die Überwachungseinheit 20 übernimmt wie bei Fig. 2 beschrieben Überwachungs- und Testfunktionen für die einzelnen Module des Steuergerätes 8.

Des Weiteren ist im Steuergerät 8 ein Stromversorgungssystem 21 vorgesehen, das eine Stromüberwachungseinheit 22, eine Stromversorgungseinheit 23 und eine Sensorstromversorgungseinheit 24 umfasst.

Wie in der unteren Bildhälfte von Fig. 3 dargestellt, werden Signale eines zweiten Sensors 13b über einen Berechnungsblock 27 verarbeitet, der eine Berechnungseinheit wie die erste Berechnungseinheit 16 aufweist, die in dem dem ersten Sensor 13a zugeordneten Berechnungsblock enthalten ist. Die Signalaufbereitung der dem zweiten Sensors 13b zugeordneten Einheit besitzt keine Lenkwinkelauswertung, es erfolgt nur die Erfassung der Rotorlage im On-Zustand. Im Off-Zustand ist diese Einheit komplett deaktiviert.

Die Stromverbrauchssteuerung 15 sorgt für Energieeffizienz, indem das Steuergerät in einen Sleep-Modus geschaltet wird, falls das Fahrzeug steht und der Motor ausgeschaltet ist.

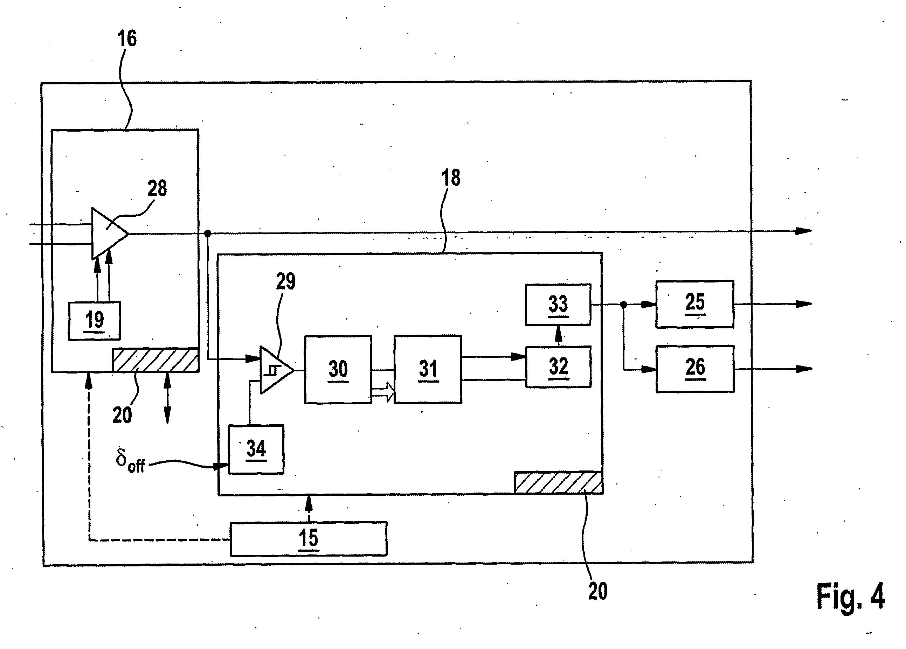

In Fig. 4 sind die Berechnungseinheiten 16 und 18 nochmals detailliert dargestellt. Die erste Berechnungseinheit 16, der die Sensorsignale zugeführt werden, umfasst ein Verstärkungsglied 28, in dem die Differenz aus den beiden vom Sensor kommenden Signalen verstärkt und außerdem um einen Offsetwert δ_{off} bereinigt wird, der über die Offset-Korrektureinheit 19 ermittelt wird. Dieser Offset δ_{off} wird über ein Modul 34 auch der zweiten Berechnungseinheit 18 zugeführt.

Das verstärkte Signal der Differenz aus den beiden Sensorsignalen wird anschließend in der zweiten Berechnungseinheit 18 einem Vergleichsglied 29 zugeführt, in dem ein Vergleich zwischen dem zugeführten Wert und dem bereits zuvor angesprochenen Offset durchgeführt wird. Das daraus entstandene Signal wird einem Signalspeicher 30 zugeführt, in welchem eine Signalspeicherung über mindestens zwei aufeinander folgende Zeitschritte erfolgt, sowie einer Drehrichtungserkennungseinheit 31, in der aus den zumindest zwei aufeinander folgenden Signalen die Drehrichtung des Rotors des elektrischen Servomotors festgestellt wird. In einem nachgeschalteten Integrierer 32 erfolgt eine Aufintegration der Signale, die in einem weiteren Speicher 33 gespeichert werden können. Über die Schnittstellen 25 und 26 können die gewonnenen Ausgangssignale aus dem Steuergerät 8 abgegriffen werden.

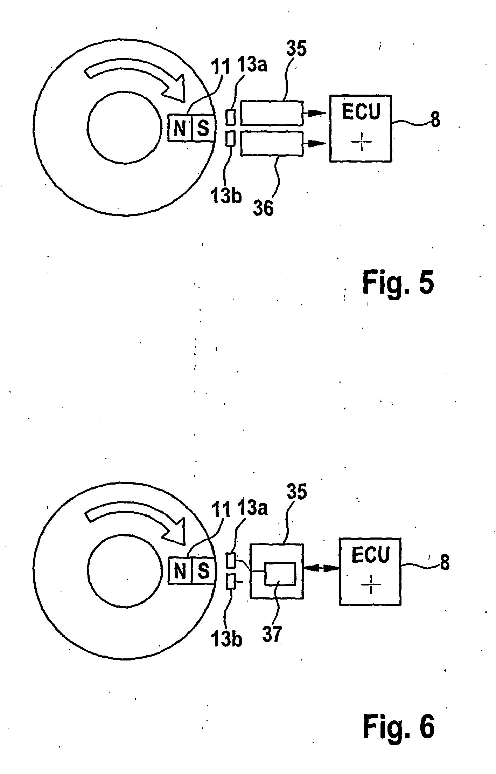

In den Fig. 5 und 6 sind Ausführungsbeispiele für eine redundante Sensordetektierung sowie Signalaufbereitung dargestellt. Um den Umlauf der Welle zu sensieren - entweder der Lenkwelle des Lenksystems oder der Rotorwelle des elektrischen Antriebsmotors -, ist ein Magnet 11 drehfest mit der Welle verbunden, dessen Magnetfeld von zwei Magnetfeldsensoren 13a und 13b detektiert wird. Gemäß Fig. 5 ist jedem der beiden Magnetfeldsensoren 13a und 13b eine Signalaufbereitungseinheit 35 bzw. 36 zugeordnet, so dass auf der Ebene der Signalaufbereitungseinheiten Redundanz vorliegt. Die aufbereiteten Signale werden anschließend den weiterverarbeitenden Modulen im Steuergerät 8 zugeführt. Auch die Signalübertragung von den Signalaufbereitungseinheiten 35 und 36 zum Steuergerät 8 erfolgt separat und unabhängig voneinander, so dass auch insoweit Redundanz vorliegt.

Gemäß Fig. 6 ist die gleiche Sensorik mit drehfest angeordneten Magneten 11 und zwei Magnetfeldsensoren 13a und 13b wie in Fig. 5 vorgesehen. Im Unterschied zur Fig. 5 ist den beiden Magnetfeldsensoren 13a und 13b jedoch nur eine Signalaufbereitungseinheit 35 zugeordnet, die mit einem Umschalter 37 ausgestattet ist, über die die Signalaufbereitungseinheit 35 wahlweise mit einem der beiden Sensoren 13a bzw. 13b zu verbinden ist. In dieser vereinfachten Ausführung kann auf eine zusätzliche Signalaufbereitungseinheit verzichtet werden, allerdings können die Signale der beiden Sensoren 13a und 13b nicht gleichzeitig verarbeitet werden. Die Datenübertragung zwischen der Signalaufbereitungseinheit 35 und den Modulen des Steuergerätes 8 erfolgt bidirektional.

In den Signalaufbereitungseinheiten gemäß den Fig. 5 und 6 erfolgt eine Datenwandlung von analog zu digital, außerdem können in den Signalaufbereitungseinheiten auch Testfunktionen realisiert sein.

Die Magnetfeldsensoren 13a und 13b in den Ausführungsbeispielen nach den Fig. 5 und 6 sind zweckmäßigerweise Bestandteil des Steuergeräts 8.

## Patentansprüche

1. Verfahren zur Regelung oder Steuerung einer Servoantriebseinheit (7) in einem Lenksystem (1) eines Fahrzeugs, wobei das Lenksystem (1) eine Lenkwelle (3) umfasst, über die ein vom Fahrer vorgegebener Lenkwinkel (δ_{L}) auf ein Lenkgestänge (5) zur Einstellung eines Radlenkwinkels (δᵥ) an den gelenkten Rädern (6) des Fahrzeugs übertragbar ist, und wobei über die Servoantriebseinheit (7) ein auf das Lenkgestänge (5) wirkendes Unterstützungsmoment erzeugbar ist, wobei zur Bestimmung der Ausgangs-Nulllage der Lenkwelle (3) dem Steuergerät (8) der Servoantriebseinheit (7) als Eingangssignal der Wert mindestens einer Fahrzeugzustandsgröße (ωᵢ, M_{Mot}, M_{L}, a, ψ̇) zuführbar ist, bei der es sich nicht um eine Lenkwinkelgröße handelt, wobei die Ausgangs-Nulllage vorliegt, falls die Fahrzeugzustandsgröße (ωᵢ, M_{Mot}, M_{L}, a, ψ̇) in einem definierten Wertebereich liegt,
**dadurch gekennzeichnet,**
**dass** zusätzlich ein Indexsignal zur Verbesserung und Plausibilisierung des Wertes für die Ausgangs-Nulllage herangezogen wird, wobei das Indexsignal bei jedem Umlauf der Lenkwelle (3) oder einer sonstigen, mit der Lenkwelle gekoppelten und umlaufenden Welle (12) erzeugbar ist.

2. Verfahren nach Anspruch 1,
**dadurch gekennzeichnet,**
**dass** die Fahrzeugzustandsgröße die Differenz aus den Winkelgeschwindigkeiten (ωᵢ) zwischen den gelenkten Rädern (6) ist, wobei die Ausgangs-Nulllage vorliegt, falls die Differenz-Winkelgeschwindigkeit unterhalb eines Grenzwerts liegt.

3. Verfahren nach Anspruch 1 oder 2,
**dadurch gekennzeichnet,**
**dass** das Lenkmoment (M_{L}) ermittelt und als Fahrzeugzustandsgröße zur Bestimmung der Ausgangs-Nulllage herangezogen wird.

4. Verfahren nach einem der Ansprüche 1 bis 3,
**dadurch gekennzeichnet,**
**dass** das Motormoment (M_{Mot}) in einem elektrischen Servomotor (7) ermittelt und als Fahrzeugzustandsgröße zur Bestimmung der Ausgangs-Nulllage herangezogen wird.

5. Verfahren nach einem der Ansprüche 1 bis 4,
**dadurch gekennzeichnet,**
**dass** die Querbeschleunigung (a) ermittelt und als Fahrzeugzustandsgröße zur Bestimmung der Ausgangs-Nulllage herangezogen wird.

6. Verfahren nach einem der Ansprüche 1 bis 5,
**dadurch gekennzeichnet,**
**dass** die Gierrate (ψ̇) ermittelt und als Fahrzeugzustandsgröße zur Bestimmung der Ausgangs-Nulllage herangezogen wird.

7. Verfahren nach einem der Ansprüche 1 bis 6,
**dadurch gekennzeichnet,**
**dass** das Indexsignal bei jedem Umlauf der Rotorwelle (12) des elektrischen Servomotors (7) erzeugbar ist.

8. Verfahren nach einem der Ansprüche 1 bis 7,
**dadurch gekennzeichnet,**
**dass** zur Bestimmung des Indexsignals an der Welle (3) ein Magnet (11) angeordnet ist, dessen Magnetfeld von einem Magnetfeldsensor (13) detektierbar ist.

9. Verfahren nach einem der Ansprüche 1 bis 8,
**dadurch gekennzeichnet,**
**dass** zwei unabhängig arbeitende Sensoren (13a, 13b) zur Detektierung des Wellenumlaufs vorgesehen sind, deren Signale in einem Steuergerät (8) verarbeitet werden.

10. Verfahren nach Anspruch 9,
**dadurch gekennzeichnet,**
**dass** zwei Signalaufbereitungseinheiten (35, 36) angeordnet sind, die den beiden Sensoren (13a, 13b) zugeordnet sind.

11. Verfahren nach Anspruch 9,
**dadurch gekennzeichnet,**
**dass** nur eine Signalaufbereitungseinheit (35) und ein Umschalter (37) vorgesehen ist, über den die Signalaufbereitungseinheit (35) wahlweise mit einem der Magnetfeldsensoren (13a, 13b) zu verbinden ist.

12. Lenksystem für ein Fahrzeug mit einer Servoantriebseinheit und einem Steuergerät zur Durchführung des Verfahrens nach einem der Ansprüche 1 bis 11, wobei das Steuergerät (8) eine erste Berechnungseinheit (16) mit einem Verstärkungsglied und einer Offset-Korrektureinheit umfasst, einen A/D-Wandler (17), eine zweite Berechnungseinheit (18), eine Offset-Korrektureinheit (19) sowie eine Überwachungseinheit (20) aufweist, wobei der Rotordrehwinkel (δ_{Mot}), welcher von einer Sensorik (10) ermittelt wird, der ersten Berechnungseinheit (16) zugeführt wird, in welcher eine Verstärkung und eine Offset-Korrektur durchgeführt wird, wobei anschließend der ermittelte Wert dem A/D-Wandler (17) zugeführt wird, in welchem das analoge Signal in ein digitales Signal umgewandelt wird, welches danach in die zweite Berechnungseinheit (18) weitergeleitet wird, wo eine Plausibilisierung des ermittelten Wertes durchgeführt wird, wobei zusätzlich ein Indexsignal zur Verbesserung und Plausibilisierung des Wertes für die Ausgangs-Nulllage herangezogen wird, wobei das Indexsignal bei jedem Umlauf der Lenkwelle (3) oder einer mit der Lenkwelle gekoppelten und umlaufenden Rotorwelle (12) erzeugbar ist.

13. Lenksystem nach Anspruch 12,
**dadurch gekennzeichnet,**
**dass** das Steuergerät (8) mit dem Gehäuse des Servoantriebseinheit (7) verbunden, insbesondere in das Gehäuse integriert ist.

14. Lenksystem nach Anspruch 12 oder 13,
**dadurch gekennzeichnet,**
**dass** die Servoantriebseinheit (7) ein elektrischer Servomotor ist.

15. Lenksystem nach Anspruch 12 oder 13,
**dadurch gekennzeichnet,**
**dass** die Servoantriebseinheit (7) ein hydraulischer Servomotor ist.

## Claims

1. Method for performing closed-loop or open-loop control of a servodrive unit (7) in a steering system (1) of a vehicle, wherein the steering system (1) has a steering shaft (3), via which a steering angle (δ_{L}), which is predefined by the driver, can be transmitted to a steering linkage (5) in order to set a wheel steering angle (δᵥ) at the steered wheels (6) of the vehicle, and wherein an assistance torque which acts on the steering linkage (5) can be generated by means of the servodrive unit (7), wherein, in order to determine the initial zero position of the steering shaft (3), the value of at least one vehicle state variable (ωᵢ, M_{Mot}, M_{L}, a, ψ̇) can be fed to the control unit (8) of the servodrive unit (7) as an input signal, which vehicle state variable (ωᵢ, M_{Mot}, M_{L}, a, ψ̇) is not a steering angle variable, wherein the initial zero position is present if the vehicle state variable (ωᵢ, M_{Mot}, M_{L}, a, ψ̇) is in a defined value range, **characterized in that** in addition an index signal is used to improve and check the plausibility of the value for the initial zero position, wherein the index signal can be generated at every rotation of the steering shaft (3) or of some other shaft (12) which is coupled to and rotates with the steering shaft.

2. Method according to Claim 1,
**characterized**
**in that** the vehicle state variable is the difference between the angular speeds (ωᵢ) of the steered wheels (6) wherein the initial zero position is present if the differential angular speed is below a limiting value.

3. Method according to Claim 1 or 2,
**characterized**
**in that** the steering torque (M_{L}) is determined and is used as a vehicle state variable for determining the initial zero position.

4. Method according to Claims 1 to 3,
**characterized**
**in that** the engine torque (M_{Mot}) is determined in an electric servomotor (7) and is used as a vehicle state variable for determining the initial zero position.

5. Method according to one of Claims 1 to 4,
**characterized**
**in that** the lateral acceleration (a) is determined and is used as a vehicle state variable for determining the initial zero position.

6. Method according to one of Claims 1 to 5,
**characterized**
**in that** the yaw rate (ψ̇) is determined and is used as a vehicle state variable for determining the initial zero position.

7. Method according to one of Claims 1 to 6,
**characterized**
**in that** the index signal can be generated at every rotation of the rotor shaft (12) of the electric servomotor (7).

8. Method according to one of Claims 1 to 7,
**characterized**
**in that**, in order to determine the index signal, a magnet (11) whose magnetic field can be detected by a magnetic field sensor (13) is arranged on the shaft (3).

9. Method according to one of Claims 1 to 8,
**characterized**
**in that** two independently operating sensors (13a, 13b) are provided for detecting the rotation of the shaft, the signals of which sensors (13a, 13b) are processed in a control unit (8).

10. Method according to Claim 9,
**characterized**
**in that** two signal-conditioning units (35, 36) are arranged and are assigned to the two sensors (13a, 13b).

11. Method according to Claim 9,
**characterized**
**in that** just one signal-conditioning unit (35) and one changeover switch (37), via which the signal-conditioning unit (35) can be optionally connected to one of the magnetic field sensors (13a, 13b), are provided.

12. Steering system for a vehicle having a servodrive unit and a control unit for carrying out the method according to one of Claims 1 to 11, wherein the control unit (8) comprises a first calculation unit (16) with an amplifier element and an offset correction unit, an A/D converter (17), a second calculation unit (18), an offset correction unit (19) and a monitoring unit (20), wherein the rotor rotational angle (δ_{Mot}) which is determined by the sensor system (10) is fed to the first calculation unit (16) in which amplification and an offset correction are carried out, wherein the determined value is subsequently fed to the A/D converter (17) in which the analogue signal is converted into a digital signal which is then passed on into the second calculation unit (18) where plausibility checking of the determined value is carried out, wherein, in addition, an index signal is used to improve and check the plausibility of the value for the initial zero position, wherein the index signal can be generated at every rotation of the steering shaft (3) or of a rotor shaft (12) which is coupled to and rotates with the steering shaft.

13. Steering system according to Claim 12,
**characterized**
**in that** the control unit (8) is connected to the housing of the servodrive unit (7), in particular is integrated into the housing.

14. Steering system according to Claim 12 or 13,
**characterized**
**in that** the servodrive unit (7) is an electric servomotor.

15. Steering system according to Claim 12 or 13,
**characterized**
**in that** the servodrive unit (7) is a hydraulic servomotor.

## Revendications

1. Procédé de régulation ou de commande d'une unité d'entraînement servo (7) dans un système de direction (1) d'un véhicule, le système de direction (1) comprenant un arbre de direction (3) par le biais duquel un angle de direction (δ_{L}) prédéfini par le conducteur peut être transmis à une timonerie de direction (5) en vue de l'ajustement d'un angle de braquage des roues (δᵥ) au niveau des roues dirigées (6) du véhicule, et un couple d'assistance agissant sur la timonerie de direction (5) pouvant être produit par le biais de l'unité d'entraînement servo (7), la valeur d'au moins une grandeur d'état du véhicule (ωᵢ, M_{Mot}, M_{L}, a, ψ̇) pouvant être acheminée à l'appareil de commande (8) de l'unité d'entraînement servo (7) en tant que signal d'entrée en vue de déterminer la position zéro de départ de l'arbre de direction (3), à laquelle il n'y a pas de grandeur d'angle de direction, la position zéro de départ se produisant lorsque la grandeur d'état du véhicule (ωᵢ, M_{Mot}, M_{L}, a, ψ̇) se trouve dans une plage de valeurs définie,
**caractérisé en ce**
**qu'**un signal d'indexation est utilisé en outre pour améliorer et établir la plausibilité de la valeur pour la position zéro de départ, le signal d'indexation pouvant être produit à chaque tour de l'arbre de direction (3) ou d'un autre arbre (12) accouplé à l'arbre de direction et tournant avec lui.

2. Procédé selon la revendication 1,
**caractérisé en ce que**
la grandeur d'état du véhicule est la différence des vitesses angulaires (ωᵢ) entre les roues dirigées (6), la position zéro de départ se produisant lorsque la différence de vitesses angulaires est en dessous d'une valeur limite.

3. Procédé selon la revendication 1 ou 2,
**caractérisé en ce que**
le couple de direction (M_{L}) est déterminé et est utilisé en tant que grandeur d'état du véhicule pour déterminer la position zéro de départ.

4. Procédé selon l'une quelconque des revendications 1 à 3,
**caractérisé en ce que**
le couple moteur (M_{Mot}) est déterminé dans un servomoteur électrique (7) et est utilisé en tant que grandeur d'état du véhicule pour déterminer la position zéro de départ.

5. Procédé selon l'une quelconque des revendications 1 à 4,
**caractérisé en ce que**
l'accélération transversale (a) est déterminée et est utilisée en tant que grandeur d'état du véhicule pour déterminer la position zéro de départ.

6. Procédé selon l'une quelconque des revendications 1 à 5,
**caractérisé en ce que**
la vitesse de lacet (ψ̇) est déterminée et est utilisée en tant que grandeur d'état du véhicule pour déterminer la position zéro de départ.

7. Procédé selon l'une quelconque des revendications 1 à 6,
**caractérisé en ce que**
le signal d'indexation peut être produit à chaque tour de l'arbre de rotor (12) du servomoteur électrique (7).

8. Procédé selon l'une quelconque des revendications 1 à 7,
**caractérisé en ce que**
pour déterminer le signal d'indexation, un aimant (11) est disposé au niveau de l'arbre (3), son champ magnétique pouvant être détecté par un capteur de champ magnétique (13).

9. Procédé selon l'une quelconque des revendications 1 à 8,
**caractérisé en ce que**
deux capteurs (13a, 13b) fonctionnant indépendamment sont prévus pour détecter la rotation de l'arbre, leurs signaux étant traités dans un appareil de commande (8).

10. Procédé selon la revendication 9,
**caractérisé en ce que**
deux unités de traitement de signaux (35, 36) sont disposées de manière à être associées aux deux capteurs (13a, 13b).

11. Procédé selon la revendication 9,
**caractérisé en ce que**
seulement une unité de traitement de signaux (35) et un inverseur (37) sont prévus, par le biais duquel l'unité de traitement de signaux (35) peut être connectée au choix à l'un des capteurs de champ magnétique (13a, 13b).

12. Système de direction pour un véhicule comprenant une unité d'entraînement servo et un appareil de commande pour mettre en oeuvre le procédé selon l'une quelconque des revendications 1 à 11, l'appareil de commande (8) comprenant une première unité de calcul (16) avec un organe d'amplification et une unité de correction de décalage, un convertisseur A/N (17), une deuxième unité de calcul (18), une unité de correction de décalage (19) et une unité de surveillance (20), l'angle de rotation du rotor (δ_{Mot}) qui est déterminé par un système de capteurs (10) étant acheminé à la première unité de calcul (16), dans laquelle a lieu une amplification et une correction de décalage, ensuite la valeur déterminée étant acheminée au convertisseur A/N (17), dans lequel le signal analogique est converti en un signal numérique, qui est ensuite transmis à la deuxième unité de calcul (18), où un établissement de plausibilité de la valeur déterminée est effectué, un signal d'indexation étant en outre utilisé pour améliorer et établir la plausibilité de la valeur pour la position zéro de départ, le signal d'indexation pouvant être produit à chaque tour de l'arbre de direction (3) ou d'un arbre de rotor (12) accouplé à l'arbre de direction et tournant avec lui.

13. Système de direction selon la revendication 12,
**caractérisé en ce que**
l'appareil de commande (8) est connecté au boîtier de l'unité d'entraînement servo (7), en particulier est intégré dans le boîtier.

14. Système de direction selon la revendication 12 ou 13,
**caractérisé en ce que**
l'unité d'entraînement servo (7) est un servomoteur électrique.

15. Système de direction selon la revendication 12 ou 13,
**caractérisé en ce que**
l'unité d'entraînement servo (7) est un servomoteur hydraulique.
